# FASCICULE DE BREVET EUROPEEN

(11) **EP 0 360 658 B1**
(45) Date de publication et mention de la délivrance du brevet: **09.06.1993**
(21) Numéro de dépôt: 89402461.1
(22) Date de dépôt: 08.09.1989
(51) Int. Cl.: G21C 3/334

(54) **Assemblage combustible démontable pour un réacteur nucléaire refroidi par de l'eau légère**
Zerlegbares Brennstabbündel für leichtwassergekühlten Kernreaktor
Fuel assembly capable of being disassembled for a light water-cooled nuclear reactor

(30) Priorité: 19.09.1988 FR 8812213
(43) Date de publication de la demande: 28.03.1990
(73) Titulaire: FRAMATOME, 92400 Courbevoie (FR); COGEMA, F-78141 Velizy Villacoublay (FR)
(72) Inventeur: Petit, Bernard, F-69230 Saint Genis Laval (FR)
(74) Mandataire: Bouget, Lucien

(56) Documents cités:
- EP-A- 0 098 774
- EP-A- 0 140 588
- EP-A- 0 196 610

## Description

L'invention concerne un assemblage combustible démontable pour un réacteur nucléaire refroidi par de l'eau légère et en particulier pour un réacteur refroidi par de l'eau sous pression.

Les réacteurs nucléaires refroidis à l'eau et en particulier les réacteurs nucléaires à eau sous pression comportent des assemblages constitués par un faisceau de crayons combustibles de grande longueur disposés parallèlement les uns aux autres et maintenus dans une ossature formée par des tubes-guides, des entretoises et deux embouts d'extrémité. Les tubes-guides sont disposés dans la direction longitudinale de l'assemblage et sont reliés à des entretoises transversales régulièrement espacées suivant la longueur de l'assemblage.

Les tubes-guides sont également reliés à chacune de leurs extrémités à l'un ou à l'autre de deux embouts constituant des pièces de rigidification et de fermeture de l'assemblage.

Les crayons combustibles de l'assemblage constituent un faisceau dans lequel les crayons sont parallèles entre eux et disposés, dans les sections transversales de l'assemblage, suivant un réseau régulier déterminé par les entretoises. Certaines positions du réseau sont occupées par des tubes-guides qui sont généralement reliés de manière rigide aux entretoises.

Les tubes-guides ont une longueur supérieure à la longueur des crayons combustibles et sont placés dans le faisceau, de manière à comporter une partie saillante par rapport au faisceau de crayons combustibles à chacune de leurs extrémités. Les embouts sont fixés sur ces parties saillantes des tubes-guides de manière à assurer la fermeture de l'assemblage à chacune de ses extrémités.

Les crayons combustibles sont constitués par des pastilles frittées en matériau combustible nucléaire empilées à l'intérieur d'une gaine métallique isolant les pastilles du fluide entourant l'assemblage combustible. Dans le cas d'une rupture de gaine d'un crayon d'un assemblage combustible, il est nécessaire de remplacer très rapidement ce crayon pour éviter les fuites de produit radio-actif dans le fluide de refroidissement du réacteur. Pour accèder aux crayons combustibles et effectuer leur remplacement, il est nécessaire de démonter l'un des embouts de l'assemblage, ce qui suppose de supprimer les liaisons entre les extrémités correspondantes des tubes-guides et l'embout.

Les embouts comportent des trous traversants reproduisant le réseau des tubes-guides dans chacun desquels est engagé et fixé un tube-guide.

De façon à pouvoir remplacer des crayons défectueux dans les assemblages combustibles, on a conçu et mis au point de nouveaux assemblages combustibles comportant des tubes-guides dont la liaison avec l'un au moins des embouts d'extrémité est démontable.

Pour effectuer le remplacement des crayons combustibles défectueux, l'assemblage est placé sous eau en position verticale, dans une piscine telle qu'une piscine de stockage ; l'assemblage repose sur le fond de la piscine par l'un de ses embouts ou embout inférieur. L'autre embout ou embout supérieur est accessible sous une certaine hauteur d'eau depuis le dessus de la piscine.

Dans un type d'assemblage combustible démontable connu, les parties des tubes-guides engagées dans l'embout supérieur de l'assemblage comportent une partie expansible radialement qui peut être, par exemple, rapportée à l'extrémité du tube-guide. Cette partie expansible peut être constituée par une douille fendue présentant une partie en saillie radiale vers l'extérieur qui est destinée à venir se loger dans une cavité de forme correspondante usinée à l'intérieur de l'embout, dans le trou de passage du tube-guide. Un manchon de blocage introduit à l'intérieur du tube-guide réalise l'expansion radiale de la douille fendue et l'accrochage du tube-guide dont la partie en saillie radiale vient se loger à l'intérieur de la cavité usinée dans l'embout.

Le tube-guide n'est engagé dans le trou traversant la plaque adaptatrice de l'embout que sur une certaine longueur, la partie restante du trou, au-dessus du tube-guide, débouchant sur la face supérieure de la plaque adaptatrice de l'embout.

On connaît par le EP-A-0.140.588 une liaison démontable pour tube-guide d'assemblage combustible du type décrit ci-dessus comportant un manchon de blocage ayant une douille assurant l'expansion du tube-guide prolongée axialement par une virole de fixation qui vient se loger, lorsque le manchon de blocage est mis en place dans le tube-guide, dans la partie du trou située au-dessus du tube-guide et débouchant sur la face supérieure de la plaque adaptatrice. Des cavités radiales sont prévues dans cette partie du trou de la plaque adaptatrice et la virole de fixation est déformée, après mise en place du manchon de blocage dans le tube-guide, de façon que les parties déformées de cette virole de fixation viennent à l'intérieur des cavités pour réaliser le blocage axial et en rotation du manchon de blocage.

On obtient ainsi une fixation efficace du tube-guide par des opérations qui peuvent être effectuées sans difficulté, par le dessus de l'assemblage.

Cependant, le démontage du tube-guide nécessite qu'on effectue, dans un premier temps, l'extraction du manchon de blocage qui est maintenu dans l'embout par la virole de fixation. Cette opération peut être réalisée par un outil qui est introduit dans le manchon et qui comporte des parties mobiles dans des directions radiales venant se placer sous l'extrémité inférieure du manchon. Une traction est exercée sur l'outil pour permettre le déblocage de la virole de fixation et l'extraction du manchon du tube-guide.

Cette opération d'extraction du manchon de blocage avant le démontage de l'embout supérieur de l'assemblage nécessite l'utilisation d'un outillage complexe et l'intervention de forces de traction d'autant plus importantes que la fixation du manchon par l'intermédiaire de la virole est assurée de manière plus efficace.

Le but de l'invention est donc de proposer un assemblage combustible démontable pour un réacteur nucléaire refroidi par de l'eau légère comportant un faisceau de crayons combustibles parallèles maintenus dans une ossature formée par des tubes-guides, des entretoises et des embouts d'extrémité fixés sur les extrémités des tubes-guides, l'un au moins des embouts étant fixé sur l'une des extrémités de chacun des tubes-guides de manière démontable, par l'intermédiaire d'une partie d'extrémité du tube-guide déformable radialement et présentant une partie d'accrochage en saillie radiale vers l'extérieur, engagée a l'intérieur et sur une partie de la longueur du trou traversant l'embout et comportant, dans sa partie recevant le tube-guide, un élargissement annulaire destiné à recevoir la partie d'accrochage du tube-guide, l'expansion radiale de l'extrémité du tube-guide et le maintien de sa partie d'accrochage dans l'élargissement annulaire du trou de l'embout étant assurés par un manchon de blocage comportant une douille d'expansion du tube-guide et une virole de fixation dans l'embout restant saillante à l'extrémité du tube-guide en position de blocage du manchon, à l'intérieur de la partie du trou de l'embout ne recevant pas le tube-guide, qui comporte au moins une cavité radiale à l'intérieur de laquelle la virole de fixation est déformée pour assurer la fixation du manchon de blocage, cet assemblage combustible pouvant être démonté très facilement et comportant cependant des manchons de blocage des tubes-guides qui sont fixés de manière très efficace et résistante à l'intérieur de l'embout démontable.

Dans ce but, la virole de fixation qui présente une épaisseur sensiblement inférieure à l'épaisseur d'une partie au moins de la douille d'expansion du manchon est constituée par au moins deux secteurs cylindriques séparés l'un de l'autre par au moins deux fentes disposées suivant la direction des génératrices de la virole de fixation et le trou traversant l'embout comporte au moins une cavité radiale en concordance avec l'un au moins des secteurs cylindriques, dans la position de blocage du manchon.

Afin de bien faire comprendre l'invention, on va maintenant décrire, à titre d'exemple non limitatif, en se référant aux figures jointes en annexe, un mode de réalisation d'un assemblage combustible démontable pour réacteur nucléaire à eau sous pression, suivant l'invention.

La figure 1 est une vue en élévation d'un assemblage combustible d'un réacteur nucléaire à eau sous pression.

La figure 2 est une vue en élévation de l'ossature de l'assemblage représenté sur la figure 1.

La figure 3 est une vue en élévation avec coupe partielle de l'embout supérieur de l'assemblage combustible.

La figure 4 est une vue de dessus suivant 4 de l'embout supérieur représenté sur la figure 3.

La figure 5 est une vue en coupe axiale de l'extrémité d'un tube-guide d'un assemblage combustible démontable suivant l'invention, dans lequel est placé un manchon de blocage en position verrouillée à l'intérieur de la plaque adaptatrice de l'assemblage.

La figure 6 est une vue en coupe axiale de l'extrémité du tube-guide représenté sur la figure 5, dont le manchon de blocage est en position déverrouillée permettant son extraction.

La figure 7 est une vue en perspective avec arrachement d'un manchon de blocage d'un assemblage démontable suivant l'invention, avant son introduction en position de blocage dans un tube-guide.

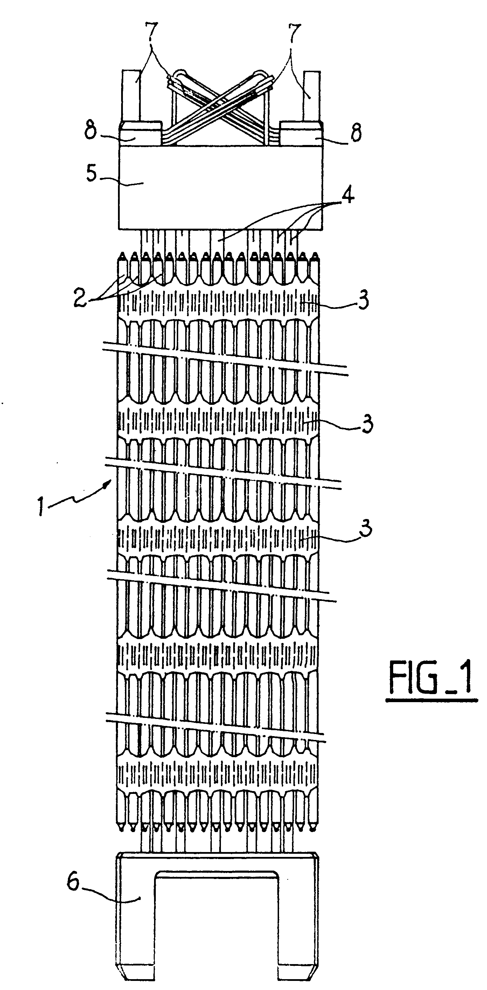

Sur la figure 1, on voit un assemblage combustible désigné de manière générale par le repère 1 et constitué par un faisceau de crayons combustibles parallèles 2 maintenus par des entretoises 3 disposées avec un certain espacement suivant la longueur des crayons 2. Les entretoises 3 sont constituées par des grilles dont les cellules reçoivent chacune un crayon combustible. Certaines positions dans le réseau des grilles sont occupées par des tubes-guides 4 dont la longueur est supérieure à la longueur des crayons combustibles 2.

Les tubes-guides 4 sont reliés à l'une de leurs extrémités à un embout 5 constituant l'embout supérieur de l'assemblage combustible et à leur autre extrémité à un second embout 6 constituant l'embout inférieur.

Lorsque l'assemblage est en position de stockage sous eau dans une piscine, l'embout supérieur 5 est accessible depuis le dessus de la piscine. Cet embout supérieur 5 porte des ressorts à lame 7 assurant le maintien de l'assemblage dans le coeur du réacteur, dont la plaque supérieure de coeur vient reposer sur les ressorts 7. L'embout comporte également des plots 8 saillants par rapport à sa face supérieure.

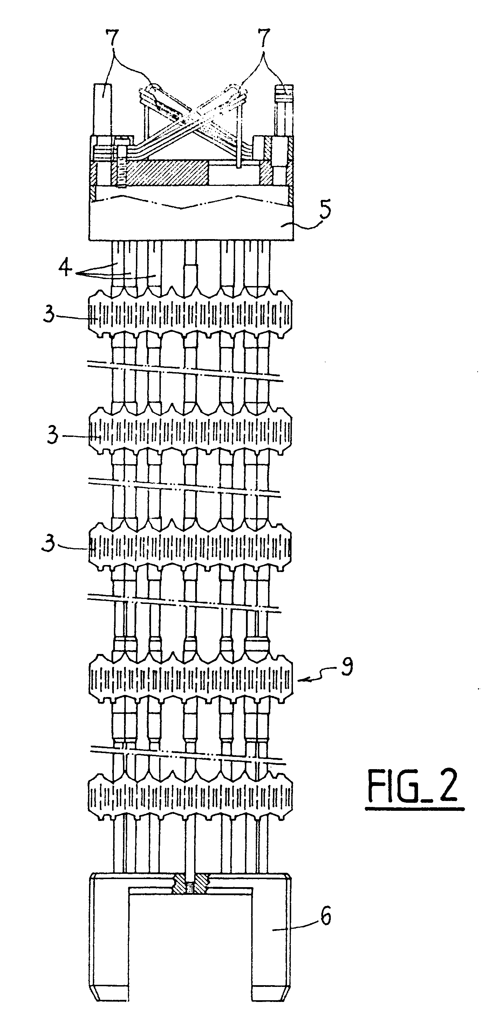

Sur la figure 2, on a représenté l'ossature 9 de l'assemblage combustible comportant les tubes-guides 4, des entretoises 3 et les embouts d'extrémité 5 et 6. Cette ossature 9 sert de logement aux crayons combustibles 2 du faisceau qui peuvent être introduits ou extraits de l'ossature, lorsque l'embout supérieur 5 est enlevé. Pour effectuer le remplacement ou le prélèvement de crayons, on prévoit des liaisons démontables entre l'extrémité des tubes-guides 4 et l'embout supérieur 5.

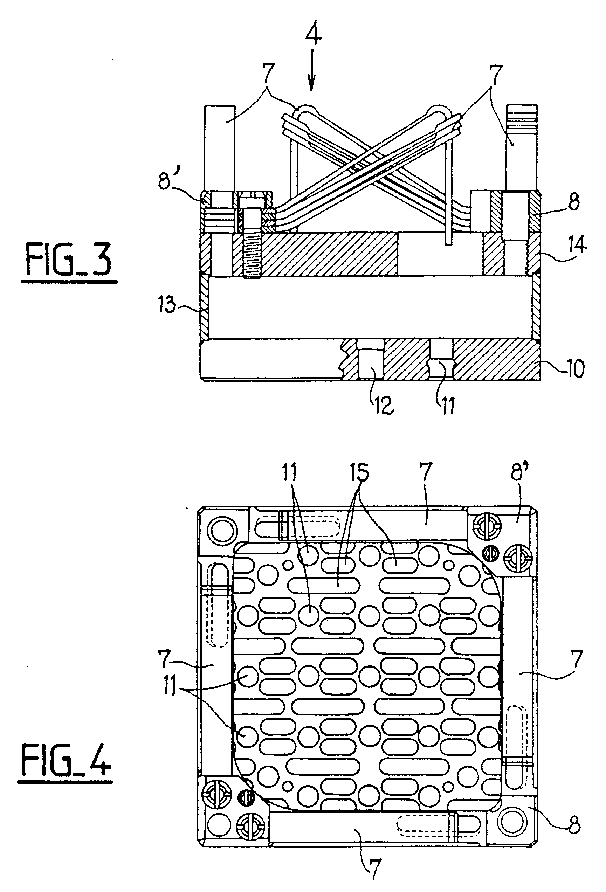

Sur les figures 3 et 4, on voit un embout supérieur d'un assemblage combustible comportant une plaque adaptatrice 10 dans laquelle viennent s'engager les tubes-guides, à l'intérieur d'ouvertures 11 traversant cette plaque adaptatrice et accessibles depuis la partie supérieure de l'assemblage combustible. Le tube-guide d'instrumentation de l'assemblage combustible situé en partie centrale est reçu dans une ouverture 12 de forme particulière. L'embout supérieur de l'assemblage est constitué par la plaque adaptatrice 10 et par un cadre 14 reliés entre eux par l'intermédiaire d'une jupe 13 soudée sur la plaque 10 et sur le cadre 14. Le cadre 14 porte les bossages 8 comportant les ouvertures de centrage et des brides 8' de maintien des ressorts 7.

Comme il est visible sur la figure 4, les trous de passage 11 permettant la fixation des tubes-guides 4 sont disposés dans des positions définies correspondant aux positions des vingt-quatre tubes-guides de l'assemblage. Des trous de passage d'eau 15 traversent la plaque adaptatrice 10 de l'embout entre les ouvertures traversantes 11 des tubes-guides.

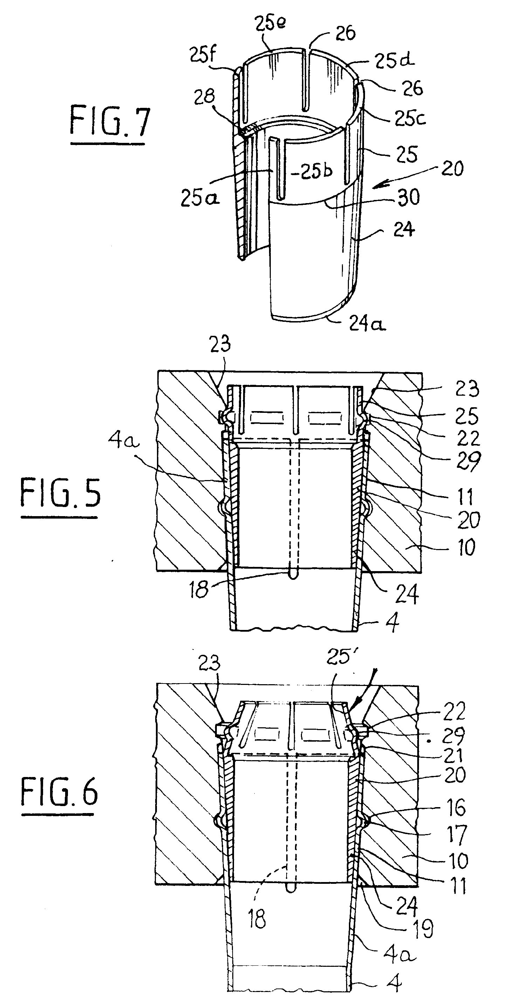

Comme il est visible sur les figures 5 et 6, la partie supérieure 4a du tube 4 présente une forme tronconique évasée vers le haut correspondant à la forme du trou de passage 11 dans sa partie inférieure recevant l'extrémité du tube 4.

La partie supérieure 4a du tube 4 comporte de plus deux fentes telles que la fente 18 disposées suivant la direction des génératrices du tronc de cône et dans des positions diamétralement opposées. Ces deux fentes telles que la fente 18 délimitent deux secteurs tronconiques dans la partie supérieure 4a du tube-guide 4 qui possède ainsi une certaine latitude de déformation radiale. Dans la partie supérieure 4a du tube-guide 4, on prévoit d'autre part, sur chacun des secteurs déformables radialement, une partie en saillie vers l'extérieur 17 en forme de portion d'anneau qui vient se loger, lorsque le tube-guide 4 est mis en place dans l'ouverture 11 de la plaque adaptatrice 10, à l'intérieur d'un élargissement annulaire 16 du trou 11. L'expansion radiale de la partie supérieure 4a du tube 4 est assurée par un manchon de blocage 20. On réalise ainsi l'accrochage et la fixation du tube 4 dans la plaque adaptatrice 10 et l'embout démontable 5.

La partie de l'ouverture traversante 11 de forme tronconique recevant le tube-guide 4 et comportant l'élargissement annulaire 16 présente une partie d'entrée évasée 19 facilitant l'introduction du tube 4 et se termine par un épaulement 21.

La partie 17 du tube 4 de forme annulaire et en saillie vers l'extérieur est préformée avant l'introduction du tube dans l'ouverture 11 et permet par élasticité des secteurs tronconiques le blocage axial du tube 4 dans la cavité annulaire 16. Il est à remarquer que la partie supérieure du tube 4 ne vient pas en butée sur l'épaulement 21 dans sa position d'engagement à l'intérieur de la plaque adaptatrice. Cette disposition permet de faciliter la mise en place et d'améliorer le positionnement du tube-guide 4 dans la plaque adaptatrice 10.

La partie de l'ouverture 11 située au-dessus de l'épaulement 21 comporte des cavités 22 en forme de portions d'anneau usinées dans la direction radiale à l'intérieur de la plaque adaptatrice 10.

Au-dessus des cavités 22, l'ouverture 11 comporte une partie tronconique 23 évasée vers le haut et débouchant sur la face supérieure de la plaque adaptatrice 10.

Sur la figure 7, on voit un manchon de blocage 20 d'un tube-guide tel que représenté sur les figures 5 et 6 qui comporte une partie inférieure 24 constituée par une virole de forme tronconique et une partie supérieure 25 constituée par une virole de forme cylindrique.

La virole tronconique 24 qui comporte à son extrémité inférieure une surface d'engagement 24a est destinée à venir en position de blocage à l'intérieur de l'extrémité 4a du tube-guide 4 comme représenté sur les figures 5 et 6. La virole 24 assure l'expansion radiale des secteurs tronconiques constituant la partie supérieure 4a du tube-guide 4 et le maintien des saillies 17 dans l'élargissement annulaire 16 du trou 11.

La virole supérieure 25 constitue la virole de fixation du manchon de blocage venant se loger dans la partie supérieure du trou 11 de la plaque adaptatrice 10, lorsque le manchon 20 est en position de blocage comme représenté sur les figures 5 et 6.

Selon l'invention, la virole 25 est constituée par six secteurs cylindriques successifs 25a, 25b, 25c, 25d, 25e et 25f séparés par des fentes 26 usinées dans la direction des génératrices de la virole 25, également espacées et donc situées à 60° les unes des autres autour de l'axe de symétrie de la virole 25.

D'autre part, la virole 25 présente une épaisseur sensiblement plus faible que l'épaisseur de la virole tronconique 24, dans sa partie supérieure, au voisinage de sa grande base. Un rebord 28 assure la séparation, à la partie interne du manchon de blocage 20, entre la virole cylindrique 25 de faible épaisseur et la virole tronconique 24.

La surface intérieure de la virole tronconique 24 est sensiblement cylindrique, si bien que l'épaisseur de cette virole est décroissante depuis sa partie supérieure jusqu'à sa partie inférieure, au niveau de laquelle la surface d'engagement 24a constitue un biseau réduisant brusquement l'épaisseur de la virole.

La virole tronconique 24 dont l'épaisseur est relativement forte présente une bonne rigidité permettant un maintien efficace du tube 4 dans la plaque adaptatrice. L'engagement en force de la virole tronconique 24 dans la partie supérieure 4a du tube 4 peut être assurée par poussée sur le rebord annulaire interne 28 grâce à un outil introduit à l'intérieur de la virole 25.

Après mise en place du manchon de blocage, sa fixation peut être réalisée par déformation de chacun des secteurs cylindriques 25a, 25b, ... 25f de relativement faible épaisseur à l'intérieur d'une cavité 22 de la plaque adaptatrice 10.

Les déformations radiales 29 des secteurs cylindriques à l'intérieur des cavités 22 permettent de réaliser une fixation axiale du manchon 20 dans la plaque adaptatrice. De plus, dans le cas où des cavités 22 discontinues en forme de portions d'anneau sont usinées dans le trou 11 de la plaque adaptatrice, on réalise également un blocage en rotation du manchon 20.

Dans le cas du manchon de blocage 20 représenté sur la figure 7, on pourra usiner six cavités 22 disposées à 60° autour de l'axe du trou 11.

On obtient ainsi une fixation très efficace du manchon de blocage 20, par l'intermédiaire de la virole 25 en plusieurs parties.

En outre, les secteurs cylindriques 25a à 25f d'épaisseur relativement faible peuvent être pliés vers l'intérieur autour de la ligne de raccordement 30 entre la partie cylindrique et la partie tronconique du manchon 20. La virole de fixation 25 passe alors de sa configuration représentée sur la figure 5 à sa configuration repliée 25' représentée sur la figure 6. Dans la position repliée 25' des secteurs cylindriques, les parties en saillie radiale vers l'extérieur 29 se trouvent à l'extérieur des cavités 22, si bien que la retenue du manchon 20 dans le tube de guidage 4 et dans le trou 11 n'est plus assurée par la virole de fixation 25. On peut alors effectuer facilement l'extraction du manchon de blocage 20 sans exercer d'effort de traction important sur ce manchon.

Le pliage des secteurs cylindriques peut être effectué facilement en introduisant un outil de forme adéquate dans l'ouverture tronconique 23, autour de la partie supérieure des secteurs cylindriques.

Le manchon de blocage des tubes-guides de l'assemblage suivant l'invention permet donc d'assurer un maintien très efficace du tube-guide et peut être extrait très facilement au moment du démontage de l'embout supérieur de l'assemblage.

L'invention ne se limite pas au mode de réalisation qui a été décrit.

C'est ainsi que la partie inférieure du manchon de blocage constituant une douille d'expansion du tube peut avoir une forme cylindrique et non plus tronconique, dans le cas où le tube et la partie d'entrée du trou traversant 11 ont eux-mêmes une forme cylindrique.

Les secteurs cylindriques constituant la virole de fixation 25 peuvent être en nombre quelconque, par exemple quatre ou huit secteurs. On peut envisager de limiter le nombre de secteurs à deux en prévoyant des fentes d'une largeur suffisante pour permettre le rabattement des secteurs vers l'intérieur. Ces secteurs peuvent être de même taille ou de taille différente. Les déformations assurant la fixation du manchon de blocage peuvent être réalisées uniquement sur certains secteurs cylindriques ou sur l'ensemble de ces secteurs.

Les cavités correspondantes prévues dans l'ouverture de la plaque adaptatrice peuvent être discontinues ou constituées par une simple rainure annulaire continue.

On peut envisager toute forme de la partie du trou traversant la plaque adaptatrice pour permettre l'introduction d'un outil assurant le pliage des secteurs cylindriques.

Enfin, l'invention s'applique à tout assemblage combustible démontable pour un réacteur nucléaire à eau légère.

## Revendications

1. Assemblage combustible démontable pour un réacteur nucléaire refroidi par de l'eau légère comportant un faisceau de crayons combustibles parallèles maintenus dans une ossature (9) formée par des tubes-guides (4), des entretoises (3) et des embouts d'extrémité (5, 6) fixés sur les extrémités des tubes-guides (4), l'un au moins des embouts (5) étant fixé sur l'une des extrémités de chacun des tubes-guides (4) de manière démontable, par l'intermédiaire d'une partie d'extrémité (4a) du tube-guide (4) déformable radialement et présentant une partie d'accrochage (17) en saillie radiale vers l'extérieur, engagée à l'intérieur et sur une partie de la longueur d'un trou (11) traversant l'embout (5) et comportant, dans sa partie recevant le tube-guide (4) un élargissement (16) destiné à recevoir la partie d'accrochage (17) du tube-guide (4), l'expansion radiale de l'extrémité du tube-guide (4) et le maintien de sa partie d'accrochage (17) dans l'élargissement annulaire (16) du trou (11) de l'embout (5) étant assurés par un manchon de blocage (20) comportant une douille d'expansion (24) du tube-guide (4) et une virole (25) de fixation dans l'embout (5) restant saillante à l'extrémité du tube-guide (4) dans la position de blocage du manchon (20), à l'intérieur de la partie du trou (11) de l'embout (5) ne recevant pas le tube-guide (4) qui comporte au moins une cavité radiale (22) à l'intérieur de laquelle la virole de fixation (25) est déformée pour assurer la fixation du manchon de blocage (20), caractérisé par le fait que la virole de fixation (25) qui présente une épaisseur sensiblement inférieure à l'épaisseur d'une partie au moins de la douille d'expansion (24) du manchon (20) est constituée par au moins deux secteurs cylindriques (25a, 25b, ..., 25f) séparés l'un de l'autre par au moins deux fentes (26) disposées suivant la direction des génératrices de la virole de fixation (25) et que le trou (11) traversant l'embout (5) comporte au moins une cavité radiale (22) en concordance avec l'un au moins des secteurs cylindriques (25a, ..., 25f), dans la position de blocage du manchon (20).

2. Assemblage combustible suivant la revendication 1, caractérisé par le fait que la douille d'expansion (24) du manchon de blocage (20) présente une forme tronconique.

3. Assemblage combustible suivant l'une quelconque des revendications 1 et 2, caractérisé par le fait que la virole de fixation (25) est constituée de six secteurs cylindriques identiques (25a, ..., 25f).

4. Assemblage combustible suivant l'une quelconque des revendications 1 à 3, caractérisé par le fait que le manchon de blocage (20) comporte, à sa partie interne, dans la zone de jonction entre la virole de fixation (25) et la douille d'expansion (24), un rebord annulaire (28) saillant dans la direction radiale vers l'intérieur, permettant d'exercer une poussée sur le manchon de blocage (20) pour son engagement dans le tube-guide (4).

5. Assemblage combustible suivant l'une quelconque des revendications 1 à 4, caractérisé par le fait que le trou (11) traversant d'une plaque adaptatrice (10) de l'embout (5) comporte une partie d'extrémité (23) débouchant sur une face de sortie de la plaque adaptatrice opposée à une face d'entrée par laquelle pénètre le tube-guide (4), de forme tronconique et évasée en direction de la face de sortie de la plaque adaptatrice, pour permettre le passage d'un outil de pliage vers l'intérieur des secteurs cylindriques, de la virole de fixation (25).

## Patentansprüche

1. Zerlegbare Brennelementkassette für einen leichtwassergekühlten Kernreaktor, mit einem Bündel von parallelen Brennstäben, die in einem aus Führungsrohren (4), Verstrebungen (3) und an den Enden der Führungsrohre (4) befestigten Kopfstücken (5, 6) gebildeten Tragwerk (9) gehalten werden, wobei mindestens eines der Kopfstücke (5) mit Hilfe eines Endbereichs (4a) des Führungsrohrs (4), der radial verformbar ist und einen radial nach außen vorspringenden Aufhängungsbereich (17), aufweist, an einem der Enden eines jeden FÜhrungsrohrs (4) in lösbarer Weise befestigt ist,
wobei des Aufhängungsbereich (17) im Innern auf einem Teil der Länge eines das Kopfstück (5) durchlaufenden Loches (11) engreift,
wobei das Loch in seinem das Führungsrohr (4) aufnehmenden Bereich eine zur Aufnahme des Aufhängungsbereichs (17) des Führungsrohrs (4) bestimmte Erweiterung (16) aufweist,
wobei die radiale Erweiterung des Endes des Führungsrohrs (4) und die Verankerung seines Aufhängungsbereichs (17) in der ringförmigen Erweiterung (16) des Lochs (11) des Kopfstücks (5) durch eine Blockierhülse (20) sichergestellt sind, die ein Rohrstück (24) zum Ausdehnen des Führungsrohrs (4) und einen Ring (25) zur Befestigung im Kopfstück (5) umfaßt,
wobei der Ring in Blockierstellung der Hülse (20) im Innern desjenigen Bereichs des Lochs (11) des Kopfstücks (5), der nicht das Führungsrohr (4) aufnimmt und mindestens einen radialen Hohlraum (22) aufweist, in dessen Innern der Befestigungsring (25) verformt wird, um die Befestigung der Blockierhülse (20) sicherzustellen, über das Ende des Führungsrohrs (4) übersteht,
dadurch gekennzeichnet, daß der Befestigungsring (25), der eine deutlich geringere Dicke als zumindest ein Bereich des Dehnungsrohrstücks (24) der Hülse (20) aufweist, aus mindestens zwei Zylindersektoren (25a, 25b, ..., 25f) gebildet wird, die voneinander durch mindestens zwei in Richtung der Mantellinien des Befestigungsrings (25) angeordnete Spalte (26) getrennt sind, und daß das das Kopfstück (5) durchlaufende Loch (11) mindestens einen radialen Hohlraum (22) aufweist, der mit mindestens einem der Zylindersektoren (25a,... 25f) in der Blockierstellung der Hülse (20) zusammenpaßt.

2. Brennelementkassette nach Anspruch 1, dadurch gekennzeichnet, daß das Dehnungsrohrstück (24) der Blockierhülse (20) eine kegelige Form aufweist.

3. Brennelementkassette nach einem der Ansprüche 1 oder 2, dadurch gekennzeichnet, daß der Befestigungsring (25) aus sechs identischen Zylindersektoren (25a, ...25f) gebildet ist.

4. Brennelementkassette nach einem der Ansprüche 1 bis 3, dadurch gekennzeichnet, daß die Blockierhülse (20) in ihrem Innenbereich im Verbindungsabschnitt zwischen dem Befestigungsring (25) und dem Dehnungsrohrstück (24) eine ringförmige Krempe (28) aufweist, die in radialer Richtung nach innen vorsteht und es ermöglicht, zum Einführen der Blockierhülse (20) in das Führungsrohr (4) Druck auszuüben.

5. Brennelementkassette nach einem der Ansprüche 1 bis 4, dadurch gekennzeichnet, daß das eine Vorsatzplatte (10) des Kopfstücks (5) durchlaufende Loch (11) einen Endbereich (23) umfaßt, der auf einer Ausgangsseite der Vorsatzplatte mündet, die einer Eingangsseite gegenüberliegt, durch die das Führungsrohr (4) eindringt, und der kegelig und sich zur Ausgangsseite der Vorsatzplatte hin erweiternd geformt ist, um den Durchgang eines Biegewerkzeugs zum Innern der Zylindersektoren des Befestigungsrings (25) zuzulassen.

## Claims

1. A demountable fuel assembly for a nuclear reactor cooled by light water, comprising a bundle of parallel fuel rods held inside a framework (9) formed by guide tubes (4), struts (3) and end blocks (5, 6) fixed onto the ends of the guide tubes (4), at least one of the end blocks (5) being fixed onto one of the ends of each of the guide tubes (4) in a demountable manner, by means of an end part (4a) of the guide tube (4) which is radially deformable and has a securing part (17) projecting radially outwards, engaging inside and over part of the length of a hole (11) passing through the end block (5) and comprising, in its part receiving the guide tube (4), an annular enlargement (16) adapted to receive the securing part (17) of the guide tube (4), radial expansion of the end of the guide tube (4) and holding of its securing part (17) inside the annular enlargement (16) of the hole (11) in the end block (5) being ensured by a locking sleeve (20) comprising a bush (24) for expanding the guide tube (4) and a ferrule (25) for fixing in the end block (5) projecting at the end of the guide tube (4) in the locked position of the sleeve (20), inside the part of the hole (11) in the end block (5) which does not receive the guide tube (4), which comprises at least one radial cavity (22) inside which the fixing ferrule (25) is deformed so as to ensure fixing of the locking sleeve (20), characterised in that the fixing ferrule (25), which has a thickness substantially less than the thickness of at least part of the expansion bush (24) of the sleeve (20), consists of at least two cylindrical segments (25a, 25b, ... 25f) separated from one another by at least two slits (26) arranged in the direction of the generatrices of the fixing ferrule (25) and in that the hole (11) passing through the end block (5) comprises at least one radial cavity (22) registering with at least one of the cylindrical segments (25a, ... 25f), in the locked position of the sleeve (20).

2. A fuel assembly according to claim 1, characterised in that the expansion bush (24) of the locking sleeve (20) has a frustoconical shape.

3. A fuel assembly according to one of claims 1 and 2, characterised in that the fixing ferrule (25) consists of six identical cylindrical segments (25a, .., 25f).

4. A fuel assembly according to one of claims 1 to 3, characterised in that the locking sleeve (20) comprises, on the inside, in the zone where the fixing ferrule (25) and the expansion bush (24) are joined, an annular shoulder (28) projecting radially inwards, allowing a pushing force to be exerted on the locking sleeve (20) so as to engage it inside the guide tube (4).

5. A fuel assembly according to one of claims 1 to 4, characterised in that the hole (11) passing through an adapter plate (10) of the end block (5) comprises an end part (23) emerging on an outlet side of the adapter plate opposite an inlet side through which the guide tube (4) penetrates, of frustoconical shape and widening out in the direction of the outlet side of the adapter plate, so as to allow the insertion of a tool for folding the cylindrical segments of the fixing ferrule (25) inwards.
